# FASCICULE DE BREVET EUROPEEN

(11) **EP 3 013 685 B1**
(45) Date de publication et mention de la délivrance du brevet: **09.08.2017**
(21) Numéro de dépôt: 14749881.0
(22) Date de dépôt: 20.06.2014
(51) Int. Cl.: B64C 11/26, B64D 45/00

(54) **SYSTEME DE LIAISON A DISTANCE POUR AERONEF**
REMOTE-VERBINDUNGSSYSTEM FÜR EIN FLUGZEUG
REMOTE CONNECTION SYSTEM FOR AN AIRCRAFT

(30) Priorité: 27.06.2013 FR 1356209
(43) Date de publication de la demande: 04.05.2016
(73) Titulaire: SNECMA, 75015 Paris (FR)
(72) Inventeur: NICQ, Geoffroy, F-77550 Moissy-Cramayel Cedex (FR)
(74) Mandataire: Urbain, Isabelle
(86) Numéro de dépôt international: PCT/FR2014/051543
(87) Numéro de publication internationale: WO 2014/207353

(56) Documents cités:
- EP-A1- 1 780 523
- US-A- 3 723 722
- US-A- 4 525 626
- US-A1- 2013 092 786

## Description

### DOMAINE DE L'INVENTION

Le présent exposé concerne les moteurs pour aéronef, et se rapporte plus particulièrement au domaine de la surveillance de la santé des pales de ces moteurs, carénées ou non.

### ETAT DE LA TECHNIQUE ANTERIEURE

La santé des pales des moteurs pour aéronef est souvent un facteur critique à surveiller, notamment lorsque les pales sont soumises à de fortes contraintes, comme c'est par exemple le cas pour les pales carénées ou non de turbomachines telles que les turbopropulseurs. En effet, la fatigue d'une pale peut conduire à un endommagement irréversible du moteur si elle n'est pas prédite suffisamment précocement.

Une technique traditionnelle pour opérer une telle surveillance consiste à effectuer des essais de résistance avec des jauges de déformation.

Cependant, de telles jauges de déformation sont fastidieuses à installer et coûteuses, d'autant plus qu'elles présentent généralement une durée de vie limitée. Leur installation sur des pales d'un moteur en service reste délicate de par l'alimentation et l'instrumentation qu'il faut apporter sur un moteur tournant. Les jauges de contraintes sont pour cela utilisées pour surveiller des pales démontées du moyeu moteur, dans des conditions de laboratoire, et de fait ne permettent pas la surveillance de la pale en cours de fonctionnement, au cours des cycles de vol sur le moteur directement.

Par ailleurs, une autre technique bien connue consiste en une détermination de l'écart de temps entre, d'une part, un intervalle de temps mesuré entre les instants de passage réels de lieux prédéterminés respectifs d'au moins deux pales successives devant un point de référence fixe, et, d'autre part, un intervalle de temps théorique entre les instants de passage théorique de ces lieux calculés en fonction de la vitesse de rotation de l'hélice; et en un suivi d'une variation de cet écart au cours du temps. Cette technique rend possible une détermination indirecte du degré de déformation locale de la pale, en le lieu prédéterminé, par rapport à sa forme d'origine et/ou l'amplitude des vibrations auxquelles ce lieu est soumis. Partant, il est possible d'apprécier le degré de fatigue de la pale et calculer sa durée de vie restante.

Il est connu d'appliquer cette technique à une extrémité distale de pale (par rapport à l'axe moteur) en tant que lieu prédéterminé de cette dernière à surveiller. Cette technique est généralement connue sous son nom anglais de « tip timing », que l'on peut traduire en français par « chronométrage de l'extrémité ».

En outre, cette technique est conventionnellement mise en oeuvre à l'aide de capteurs capacitifs ou magnétiques disposés sur une partie fixe de l'aéronef et détectant le passage du lieu de la pale à surveiller.

Un inconvénient de cette technique est que les capteurs capacitifs ou magnétiques mis en oeuvres ont une sensibilité qui s'atténue très rapidement sur la distance séparant le point d'émission du point de détection du signal. Par conséquent, cette technique ne peut être utilisée que lorsque la technologie du moteur permet un espacement réduit entre les pales et les capteurs montés sur la partie fixe de l'aéronef. Par exemple, pour les moteurs de type à rotor ouvert (couramment désignés par leur nom en anglais « open-rotor ») ou des turbopropulseurs, il est très délicat de respecter cette contrainte d'écartement réduit et donc d'assurer un fonctionnement correct des capteurs.

Il existe donc un besoin pour la réalisation d'une surveillance moins contraignante de mise en oeuvre.

US2013/092786 décrit un dispositif pour mesurer l'état d'un rotor et US3723722 décrit un dispositif d'éclairage d'hélicoptère.

### PRESENTATION DE L'INVENTION

Un premier aspect du présent exposé concerne un ensemble apte à être incorporé à un aéronef, comprenant un module fixe; une hélice de moteur à plusieurs pales apte à tourner par rapport au module fixe autour d'un axe moteur; et un système de liaison à distance. Le système comprend un dispositif optique d'émission configuré pour, lorsque le système est incorporé à l'aéronef, émettre un faisceau lumineux qui émerge à l'extérieur de l'hélice, depuis au moins une surface d'émission de ladite hélice ; et un dispositif optique de détection du faisceau lumineux, comprenant au moins une surface de détection qui est sensible au faisceau lumineux, et qui est apte à être incorporée au module fixe de telle sorte que ladite au moins une surface d'émission et ladite au moins une surface de détection viennent répétitivement en regard, à distance, l'une de l'autre, lorsque l'hélice tourne par rapport au module fixe.

Un faisceau lumineux peut ainsi se propager entre cette au moins une surface d'émission, qui est destinée à être solidaire de l'hélice, et ladite au moins une surface de détection, qui est destinée à être solidaire du module fixe. Cette au moins une surface de détection peut ainsi être espacée de l'hélice et plus particulièrement de ladite au moins une surface d'émission. Cette au moins une surface de détection peut par conséquent être fixe par rapport au module fixe, lorsque l'hélice tourne par rapport au module fixe.

En outre, pour une même distance d'espacement donnée entre lesdites surfaces d'émission et de détection, il a été observé qu'il était bien plus aisé d'obtenir une atténuation peu significative pour un faisceau lumineux se propageant entre lesdites surfaces qu'avec des signaux capacitifs ou magnétiques.

Par conséquent, le recours à un système de liaison optique mettant en oeuvre des dispositifs optiques d'émission et de détection peut permettre la réalisation d'une surveillance des pales moins contraignante qu'une surveillance selon l'art antérieur précité.

En particulier, il est possible d'espacer davantage la surface d'émission et la surface de détection l'une de l'autre qu'avec des systèmes capacitifs ou magnétiques, ce qui rend moins délicate la mise en oeuvre de la surveillance sur des moteurs dont la technologie n'autorise pas de faibles distances d'espacement entre les surfaces d'émission et de détection, comme c'est par exemple le cas pour les moteurs de type à rotor ouvert ou des turbopropulseurs.

Dans certains modes de réalisation, le système peut être tel qu'il comprend une pluralité de surfaces de détection espacées les unes des autres.

La détection peut ainsi être réalisée en plusieurs lieux espacés les uns des autres. La résolution temporelle de la détection peut ainsi être augmentée.

Dans certains modes de réalisation, le système peut être tel que, les pales de l'hélice présentant, chacune, un bord d'attaque et un bord de fuite, ladite au moins une surface d'émission est apte à être incorporée à l'un quelconque des bords, parmi le bord d'attaque et le bord de fuite (au choix), de l'une desdites pales de l'hélice.

Le bord d'attaque et le bord de fuite représentent en effet des lieux de la pale où les contraintes mécaniques sont importantes lors du fonctionnement du moteur. Il est donc pertinent de chercher à surveiller la santé de la pale à l'un de ces lieux.

Dans certains modes de réalisation, le système peut être tel que, les pales de l'hélice présentant, chacune, une extrémité distale par rapport à l'axe moteur, ladite au moins une surface d'émission est apte à être incorporée à l'extrémité distale de l'une desdites pales de l'hélice.

L'extrémité distale d'une pale (i.e. l'extrémité de la pale la plus éloignée radialement de l'axe moteur, par opposition à son extrémité proximale) représente l'endroit où la pale est la plus souple, et donc où les vibrations sont les plus importantes. Un défaut structurel de la pale, qui entraîne une variation de raideur, sera ainsi plus visible en bout de pale qu'ailleurs.

Dans certains modes de réalisation, le système peut être tel que ladite au moins une surface d'émission est apte à être incorporée entre les extrémités proximale et distale de la pale, à distance, radialement, de ces deux extrémités.

Dans certains modes de réalisation, le système peut être tel que le dispositif optique d'émission comprend une source lumineuse apte à être disposée à distance de l'hélice ; et au moins un guide optique apte à être disposé à l'intérieur d'une pale de l'hélice de sorte à guider le faisceau lumineux depuis la source lumineuse jusqu'à ladite au moins une surface d'émission.

Il est ainsi possible de diminuer sensiblement le coût d'instrumentation d'une pale donnée de l'hélice. En effet, la surveillance de cette pale peut être mise en oeuvre par une simple incorporation d'un guide optique dans ladite pale, ni plus ni moins, la source lumineuse pouvant être disposée à distance de cette pale, en particulier au voisinage de l'axe moteur, et le faisceau lumineux pouvant être émis depuis la surface d'émission de cette pale après s'être propagé dans le guide optique entre la source lumineuse et cette surface d'émission.

Par ailleurs, cette configuration permet une émission du faisceau lumineux depuis l'hélice en l'absence de tout contact électrique sur l'hélice, la source lumineuse étant disposée à distance de ladite hélice. Il est ainsi possible de contourner les difficultés techniques qui résultent classiquement de l'établissement d'un contact électrique sur une hélice, en particulier sur ses pales.

En outre, grâce à cette absence de contact électrique, le remplacement d'une pale accueillant un guide optique par une autre pale analogue n'est pas plus difficile que dans le cas du remplacement d'une pale conventionnelle par une autre, ce qui simplifie la maintenance de l'hélice.

Dans certains modes de réalisation, le système peut être tel que le dispositif optique d'émission comprend plusieurs surfaces d'émission respectivement aptes à être incorporées à plusieurs pales de l'hélice, voire à chacune des pales de l'hélice.

Le faisceau lumineux peut ainsi être émis à l'extérieur de l'hélice depuis plusieurs surfaces d'émission, chacune de ces surfaces d'émission étant destinée à être solidaire d'une pale différente. On peut ainsi surveiller la santé de plusieurs pales de l'hélice, séquentiellement, dans l'ordre où chacune des différentes surfaces d'émission passe successivement devant la surface de détection.

Dans certains modes de réalisation, le système peut être tel que le dispositif optique d'émission comprend plusieurs guides optiques respectivement aptes à être disposés à l'intérieur des pales de l'hélice destinées à incorporer les surfaces d'émission.

Ainsi, un faisceau lumineux peut être émis à partir d'une seule source lumineuse, puis se propager à travers les différents guides optiques qui sont, chacun, destinés à être disposés à l'intérieur de pales différentes de l'hélice, et enfin émerger à l'extérieur de l'hélice depuis de multiples lieux correspondants aux différentes surfaces d'émission respectivement aptes à être incorporées aux différentes pales accueillant les guides optiques. Cette configuration représente par conséquent une solution simple et peu coûteuse pour surveiller la santé de plusieurs pales de l'hélice.

Dans certains modes de réalisation, le système peut être tel que le dispositif optique d'émission comprend un obturateur apte à être disposé entre la source lumineuse et les guides optiques de manière à n'éclairer que celui ou ceux parmi les guides optiques situé(s) à l'intérieur d'au moins une plage angulaire prédéterminée.

Il est ainsi possible de n'éclairer que la ou les quelque(s) pale(s) utile(s) qui, à un instant donné, se trouve(nt) à l'intérieur d'au moins une plage angulaire prédéterminée tandis que la surface d'émission de la ou d'une de ces quelque(s) pale(s) utile(s) est en regard d'une surface de détection.

Les autres pales, dont les guides optiques respectifs se trouvent en dehors de ladite au moins une plage angulaire prédéterminée, ne sont pas éclairés par la source lumineuse, l'obturateur faisant obstacle à cet éclairage. Dès lors, l'hélice n'émet pas, depuis sa circonférence extérieure, une succession trop importante de lumières ponctuelles qui, lorsqu'observées depuis l'extérieur de l'aéronef, formeraient ensemble autrement un éclairage ressemblant à celui d'une guirlande lumineuse et pouvant s'avérer gênant et/ou peu esthétique.

Dans certains modes de réalisation, le système peut comprendre un dispositif d'identification des pales de l'hélice.

Un tel dispositif d'identification peut permettre d'identifier individuellement au moins une ou chacune (au choix) des pales de l'hélice passant devant la surface de détection et, partant d'établir un lien de correspondance entre les différents signaux successivement détectés par le dispositif optique de détection et les différentes pales passant successivement devant la surface de détection.

Dans certains modes de réalisation, le système peut être tel que le dispositif d'identification comprend un système de polarisation configuré pour modifier la phase ou la couleur du faisceau lumineux pour au moins une des surfaces d'émission.

Dans certains modes de réalisation, le système de polarisation peut comprendre au moins un polariseur destiné à être solidaire en déplacement avec l'hélice et apte à être disposé entre la source lumineuse et le guide optique d'une surface d'émission.

Dans certains modes de réalisation, le système peut être tel que, le module fixe incorporant un élément de structure d'une aile de l'aéronef, ladite au moins une surface de détection est apte à être incorporée audit élément de structure.

Dans certains modes de réalisation, le système peut être tel que, le module fixe incorporant un élément de fuselage de l'aéronef, ladite au moins une surface de détection est apte à être incorporée audit élément de fuselage.

Dans certains modes de réalisation, le système peut être tel que, le module fixe incorporant une nacelle pour l'hélice, ladite au moins une surface de détection est apte à être incorporée à ladite nacelle.

Un autre aspect du présent exposé concerne un assemblage destiné à être incorporé à un aéronef, l'assemblage comprenant un ensemble selon le deuxième aspect précité ; et un moteur muni d'au moins un rotor incorporant l'hélice de l'ensemble, et d'un stator incorporé au module fixe de l'ensemble.

Dans certains modes de réalisation, le moteur peut être un turbopropulseur.

Dans certains modes de réalisation, le moteur peut être tel que les pales de l'hélice sont non carénées. Le moteur peut alors être du type à rotor ouvert (couramment appelé « open-rotor » en anglais).

Un autre aspect du présent exposé concerne un aéronef, incorporant au moins un assemblage selon le troisième aspect précité.

Les caractéristiques et avantages précités, ainsi que d'autres, apparaîtront mieux à la lecture de la description détaillée qui suit, d'exemples de réalisation qui sont dépourvus de tout caractère limitatif et qui sont simplement proposés à titre illustratif. Cette description détaillée fait référence aux dessins annexés.

### BREVE DESCRIPTION DES DESSINS

Les dessins annexés sont schématiques et ne sont pas à l'échelle, ils visent avant tout à illustrer les principes mentionnés dans le présent exposé. Sur ces dessins annexés :
- la figure 1A représente une vue schématique en perspective d'un aéronef comprenant deux assemblages munis, chacun, d'un système de liaison à distance selon un premier exemple de réalisation conforme au présent exposé ;
- la figure 2A montre une vue partielle plane de derrière de l'aéronef selon la figure 1A, avec une vue de détail illustrant le passage de surfaces d'émission d'une pale devant des surfaces de détection ;
- la figure 3A illustre une vue de profil, dans un plan radial, d'une pale selon le premier exemple de réalisation prise isolément, dans laquelle un guide optique est incorporé ;

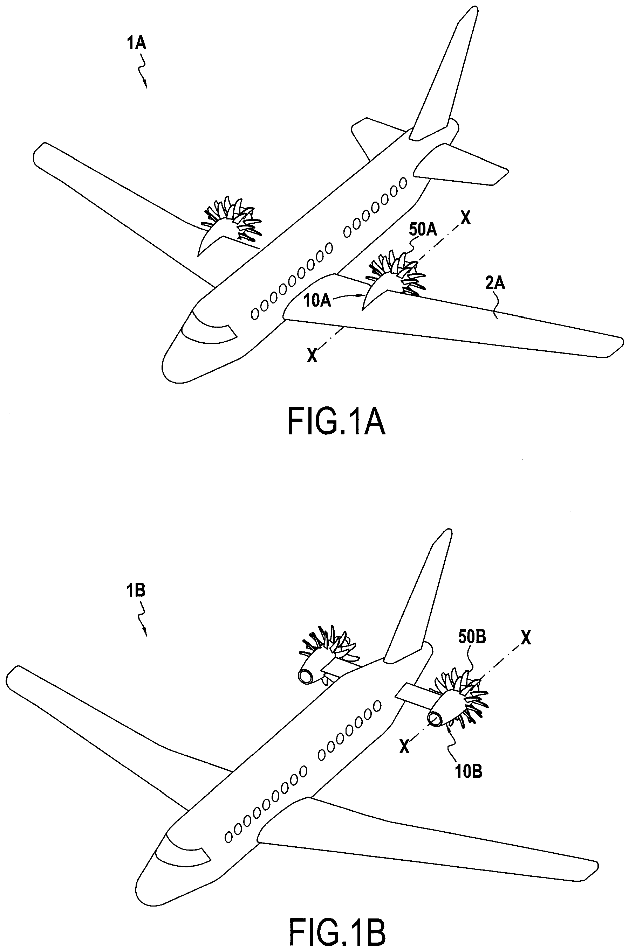

- les figures 1B, 2B et 3B représentent des figures analogues aux figures 1A, 2A et 3A, respectivement, d'un aéronef comprenant deux assemblages munis, chacun, d'un système de liaison à distance selon un deuxième exemple de réalisation conforme au présent exposé ;

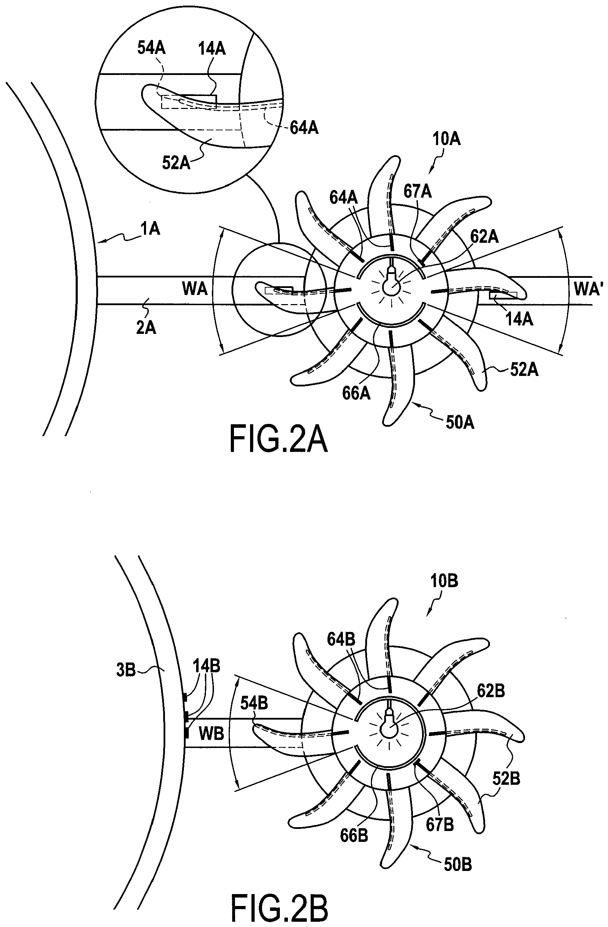

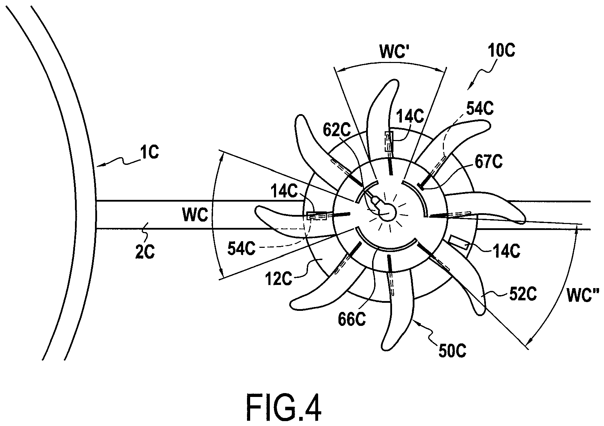

- la figure 4 montre une vue analogue aux figures 2A et 2B d'un troisième exemple de réalisation conforme au présent exposé.

### DESCRIPTION DETAILLEE D'EXEMPLES DE REALISATION

Les figures 1A, 2A et 3A représentent de façon très schématique un premier exemple de réalisation conforme au présent exposé d'un aéronef 1A comprenant deux assemblages munis, chacun, d'un système de liaison à distance.

Les figures 1B, 2B et 3B représentent de façon très schématique un deuxième exemple de réalisation conforme au présent exposé d'un aéronef 1B comprenant deux assemblages munis, chacun, d'un système de liaison à distance.

La figure 4 représente de façon très schématique un troisième exemple de réalisation conforme au présent exposé d'un aéronef 1C comprenant deux assemblages munis, chacun, d'un système de liaison à distance.

Ces premier, deuxième et troisième exemples de réalisation présentent des caractéristiques très analogues, de sorte qu'ils vont être décrits simultanément dans un souci de concision du présent exposé. Les références numériques relatives au premier exemple de réalisation auront pour suffixe -A, tandis que les références numériques relatives au deuxième exemple de réalisation auront pour suffixe -B. Enfin, les références numériques relatives au troisième exemple de réalisation auront pour suffixe -C.

Dans chacun de ces trois exemples, l'aéronef 1A, 1B, 1C incorpore deux assemblages qui sont choisis identiques (ce à quoi on peut déroger sans sortir du cadre du présent exposé), de sorte que seulement un des deux assemblages sera décrit en détail, dans le même souci de concision du présent exposé.

Dans ces exemples, un assemblage comprend un module fixe 10A, 10B, 10C apte à être incorporé à l'aéronef 1A, 1B, 1C ; un moteur muni d'un stator incorporé au module fixe et d'au moins un rotor incorporant une hélice 50A, 50B, 50C à plusieurs pales 52A, 52B, 52C apte à tourner autour d'un axe moteur X (visible sur les figures 1A et 1B) par rapport au stator ; et un système de liaison à distance.

L'hélice 50A, 50B, 50C, le module fixe 1A, 10B, 10C et le système de liaison à distance forment un ensemble au sens du présent exposé.

Dans les premier et deuxième exemples, il est choisi d'équiper l'aéronef 1A, 1B avec des moteurs de type propulseurs à deux hélices 50A, 50B munies de plusieurs pales non carénées. Ces propulseurs sont, dans ces exemples, du type à rotor ouvert (« open-rotor » en anglais) et sont bien connus en soi. Dans ces exemples, les deux hélices sont montées à l'arrière du moteur, qui plus est de manière contrarotatives.

Dans le troisième exemple, il est choisi d'équiper l'aéronef 1C avec des moteurs à au moins une hélice tractive (par exemple une seule hélice), qui sont également bien connus en soi.

On pourrait par ailleurs prévoir, sans sortir du cadre du présent exposé, un moteur comprenant une seule hélice propulsive ou bien au moins deux hélices tractives.

Dans ces trois exemples, le système de liaison à distance est un système de liaison optique. Ce système comprend un dispositif optique d'émission configuré pour, lorsque le système est incorporé à l'aéronef, émettre un faisceau lumineux qui émerge à l'extérieur d'au moins une hélice 50A, 50B, 50C, depuis plusieurs surfaces d'émission 54A, 54B, 54C de ladite hélice 50A, 50B, 50C.

Dans les premier et deuxième exemples, seule une des deux hélices 50A, 50B, en particulier seule l'hélice la plus en amont (par rapport au sens de déplacement des flux d'air lorsque les hélices sont placées dans des conditions normales d'utilisation), incorpore de telles surfaces d'émission. On pourrait toutefois prévoir, sans sortir du cadre du présent exposé, des moteurs dans lesquels chacune des deux hélices, ou bien seulement celle la plus en aval, au choix, incorpore au moins une surface d'émission.

Dans ces exemples, le système de liaison comprend un dispositif optique de détection du faisceau lumineux, comprenant au moins une surface de détection 14A, 14B , 14C qui est sensible au faisceau lumineux, et qui est apte à être incorporée au module fixe 10A, 10B, 10C de telle sorte que chaque surface d'émission 54A, 54B, 54C et ladite au moins une surface de détection 14A, 14B, 14C viennent répétitivement en regard, à distance, l'une de l'autre, lorsque l'hélice 50A, 50B, 50 tourne par rapport au module fixe 10A, 10B, 10C (voir les figures 2A, 2B et 4).

Dans le premier exemple, le module fixe 10A incorpore un élément de structure d'une aile 2A de l'aéronef 1A, et ladite au moins une surface de détection 14A est apte à être attachée audit élément de structure.

En particulier, dans cet exemple, cet élément de structure est arrangé de telle sorte que ladite au moins une surface de détection 14A se trouve sur un bord de fuite de l'aile 2A de l'aéronef 1A, lorsque cet élément de structure est incorporé à l'aile 2A. En outre, cet élément de structure peut être formé d'un seul tenant avec l'aile 2A ou bien être une pièce rapportée sur cette aile 2A.

Par ailleurs, dans cet exemple, le système de liaison comprend deux surfaces de détection 14A, qui plus est aptes à être disposées de part et d'autre du moteur sur l'aile 2A. On pourrait toutefois prévoir, sans sortir du cadre du présent exposé, une seule surface ou bien plus de deux, au choix.

Dans ce premier exemple, les emplacements respectifs de ces deux surfaces sur l'aile 2A sont volontairement prévus non symétriques par rapport à un plan contenant l'axe moteur X, pour permettre une diminution des bruits systématiques dans les signaux détectés. En particulier, ces surfaces sont décalées verticalement l'une de l'autre.

En outre, dans ce premier exemple, le flux lumineux émergeant de l'hélice 50A depuis la surface d'émission 54A est parallèle à la direction de l'axe moteur X autour duquel tourne l'hélice 50A. Par ailleurs, la surface de détection 14A est plane et perpendiculaire à cet axe moteur X dans cet exemple.

Dans le deuxième exemple, le module fixe 10B incorpore un élément de fuselage 3B de l'aéronef 1B, et ladite au moins une surface de détection 14B est apte à être attachée audit élément de fuselage 3B.

Dans ce deuxième exemple, cet élément de fuselage 3B peut être formé d'un seul tenant avec le fuselage de l'aéronef 1B ou bien être une pièce rapportée sur ce fuselage.

Dans ce deuxième exemple, le système de liaison comprend trois surfaces de détection 14B, respectivement aptes à être incorporées à l'élément de fuselage 3B en des positions angulaires, par rapport à l'axe moteur X, distinctes les unes des autres. On pourrait toutefois prévoir, sans sortir du cadre du présent exposé, une seule surface, deux ou bien plus de trois, au choix.

Dans ce deuxième exemple, les emplacements respectifs de ces trois surfaces de détection 14B sur l'élément de fuselage 3B sont volontairement prévus non symétriques par rapport à un plan contenant l'axe moteur X, pour permettre une diminution des bruits systématiques dans les signaux détectés. En particulier, ces surfaces sont décalées angulairement les unes des autres avec des angles non symétriques.

En outre, dans ce deuxième exemple, le flux lumineux émergeant de l'hélice 50B depuis la surface d'émission 54B se propage selon une direction radiale par rapport à l'axe moteur X, perpendiculaire à ce dernier.

Dans le troisième exemple, le module fixe 10C incorpore une nacelle 12C pour l'hélice 50C, et ladite au moins une surface de détection 14C est apte à être attachée à ladite nacelle 12C. Cette nacelle 12C peut être une partie fixe du moteur bien connue en soi.

Par ailleurs, dans ce troisième exemple, le système de liaison comprend trois surfaces de détection 14C aptes à être disposées angulairement espacées les unes des autres sur la nacelle 12C. On pourrait toutefois prévoir, sans sortir du cadre du présent exposé, une seule surface, deux ou bien plus de trois, au choix.

Dans ce troisième exemple, les emplacements respectifs de ces trois surfaces de détection 14C sur la nacelle 12C sont volontairement prévus non symétriques par rapport à un plan contenant l'axe moteur X, pour permettre une diminution des bruits systématiques dans les signaux détectés. En particulier, ces surfaces sont irrégulièrement espacées les unes des autres angulairement.

En outre, dans ce troisième exemple, le flux lumineux émergeant de l'hélice 50C depuis la surface d'émission 54C est parallèle à la direction de l'axe moteur X autour duquel tourne l'hélice 50C. Par ailleurs, la surface de détection 14C est plane et inclinée par rapport à cet axe moteur X dans cet exemple.

Par ailleurs, dans les trois exemples, les pales 52A, 52B, 52C de l'hélice 50A, 50B, 50C présentent, chacune, un bord d'attaque 56A, 56B et un bord de fuite 55A, 55B.

Dans les premier et deuxième exemples, les surfaces d'émission 54A, 54B sont, chacune, incorporées au bord d'attaque 56A, 56B des pales 52A, 52B de l'hélice 50A, 50B dans lesquelles ces surfaces sont respectivement aptes à être formées.

Dans le troisième exemple, les surfaces d'émission 54C sont, chacune, incorporées au bord de fuite des pales de l'hélice 50C dans lesquelles ces surfaces sont respectivement aptes à être formées.

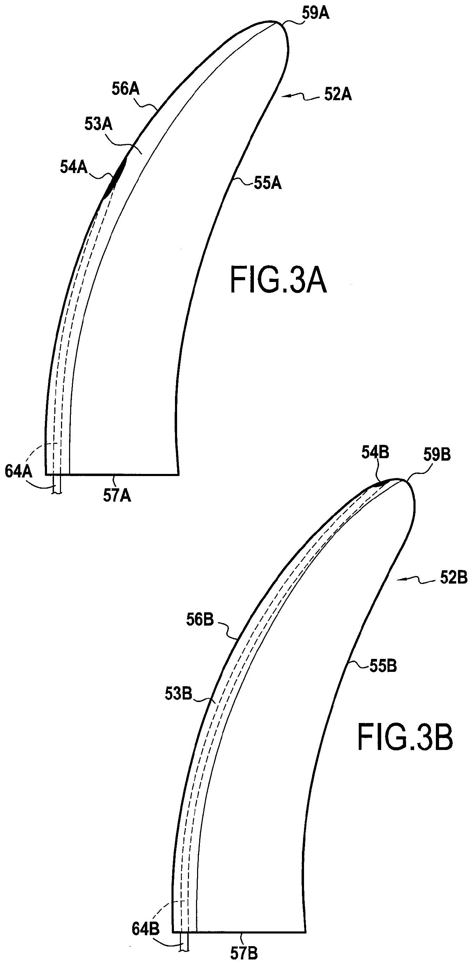

Dans le premier exemple (voir en particulier la figure 3A), les pales 52A de l'hélice présentent, chacune, selon une direction radiale par rapport à l'axe moteur X, une extrémité distale 59A et une extrémité proximale 57A par rapport audit axe moteur X, et les surfaces d'émission 54A sont formées, chacune, à distance (notamment sensiblement à mi-distance), selon cette direction radiale, des extrémités proximale 57A et distale 59A des différentes pales 52A dans lesquelles elles sont respectivement incorporées.

Les pales 52C du troisième exemple sont analogues à celles du premier exemple, à la différence près que les surfaces d'émission 54C sont formées plus proches, selon la direction radiale, de l'extrémité proximale, que dans le premier exemple.

Dans le deuxième exemple (voir en particulier la figure 3B), les pales 52B de l'hélice présentent, chacune, une extrémité distale 59B et une extrémité proximale 57B par rapport à l'axe moteur X, et les surfaces d'émission 54B sont formées dans les extrémités distales 59B des pales 52B dans lesquelles elles sont respectivement incorporées.

Par ailleurs, dans les trois exemples, le dispositif optique d'émission comprend une source lumineuse 62A, 62B, 62C apte à être disposée à distance de l'hélice 50A, 50B, 50C ; et plusieurs guides optiques 64A, 64B, 64C respectivement aptes à être disposés à l'intérieur des pales 52A, 52B, 52C de l'hélice 50A, 50B, 50C incorporant les surfaces d'émission 54A, 54B, 54C.

En particulier, dans les premier et les deuxième exemples, comme illustré aux figures 3A et 3B, les guides optiques 64A, 64B sont logés à l'intérieur d'un renfort 53A, 53B du bord d'attaque 56A, 56B. Cette solution permet de ne pas affecter la structure composite de la pale 52A, 52B et de ne pas compromettre sa résistance structure. En outre, l'incorporation des guides optiques dans les pales peut être mise en oeuvre à l'aide d'une étape de procédé de fabrication supplémentaire par rapport au procédé conventionnel de fabrication des pales, qui n'a pas d'impact significatif sur le coût et le temps de fabrication des pales.

Similairement, dans le troisième exemple, les guides optiques 64C sont logés à l'intérieur d'un renfort du bord de fuite des pales 52C.

Dans les trois exemples, le guide optique 64A, 64B, 64C présente une première extrémité qui émerge de la pale 52A, 52B, 52C depuis son extrémité proximale, de manière à venir à proximité de la source lumineuse 62A, 62B, 62C ; et une deuxième extrémité qui débouche dans le bord d'attaque 56A, 56B (respectivement de fuite) en un lieu matérialisant la surface d'émission 54A, 54B, 54C depuis laquelle le flux lumineux émerge de la pale 52A, 52B, 52C, à l'extérieur de cette dernière.

Ainsi, le guide optique 64A, 64B, 64C est apte à guider le faisceau lumineux depuis la source lumineuse 62A, 62B, 62C, jusqu'à la surface d'émission 54A, 54B, 54C, pour permettre au faisceau lumineux d'émerger de la pale 52A, 52B, 52C depuis cette surface d'émission 54A, 54B, 54C.

Dans les trois exemples, la source lumineuse 62A, 62B, 62C est au moins en partie logée à l'intérieur d'une partie centrale évidée que présente l'hélice 50A, 50B, 50C. En particulier, la source lumineuse est espacée des bords définissant l'évidement de ladite partie centrale de manière à ne pas frotter sur ces bords lorsque l'hélice tourne par rapport à la source lumineuse, qui elle reste fixe. En particulier, la source lumineuse 62A, 62B, 62C est solidaire du module fixe. Elle se trouve placée au voisinage de l'axe moteur X, lorsqu'observée dans un plan perpendiculaire audit axe moteur X.

Par ailleurs, dans les trois exemples (voir en particulier les figures 2A, 2B et 4), le dispositif optique d'émission comprend un obturateur 66A, 66B, 66C apte à être disposé entre la source lumineuse 62A, 62B, 62C et les guides optiques 64A, 64B, 64C de manière à n'éclairer que celui ou ceux parmi les guides optiques 64A, 64B, 64C situé(s) à l'intérieur d'une plage angulaire WA, WA', WB, WC, WC', WC" prédéterminée.

En particulier, dans ces exemples, l'obturateur 66A, 66B, 66C est au moins en partie logé dans la partie centrale évidée de l'hélice 50A, 50B, 50C.

En outre, dans ces exemples, l'obturateur 66A, 66B, 66C a globalement une forme de cylindre creux. Il est incorporé au module fixe de sorte à ce que son axe soit confondu avec l'axe moteur X, et de sorte à ce que la source lumineuse 62A, 62B, 62C soit au moins en partie logée dans la partie creuse de l'obturateur 66A, 66B, 66C. Ce dernier présente par ailleurs au moins une portion angulaire évidée, par laquelle la lumière émise par la source lumineuse 62A, 62B, 62C peut passer, et dont les bords délimitent ladite au moins une plage angulaire WA, WA', WB, WC, WC', WC" précitée.

Dans les premier et troisième exemples, l'obturateur 66A, 66C présente autant de plages angulaires prédéterminées WA, WA', WC, WC', WC" (et de portions angulaires évidées correspondantes) que le système de liaison comprend de surfaces de détection 14A, 14C, ce à quoi on peut déroger sans sortir du cadre du présent exposé, comme illustré dans le deuxième exemple, qui ne comprend qu'une seule plage angulaire prédéterminée WB (et une seule portion angulaire évidée correspondante).

Par ailleurs, dans les trois exemples, le système comprend un dispositif d'identification des pales 52A, 52B, 52C de l'hélice 50A, 50B, 50C.

En particulier, dans ces exemples, ce dispositif d'identification comprend un système de polarisation configuré pour modifier la phase ou la couleur du faisceau lumineux pour au moins une surface d'émission 54A, 54B (en particulier une seule dans les trois exemples, ce à quoi on peut déroger sans sortir du cadre du présent exposé).

Dans les trois exemples, le système de polarisation comprend un polariseur 67A, 67B, 67C destiné à être solidaire en déplacement avec l'hélice 50A, 50B, 50C et apte à être disposé entre la source lumineuse 62A, 62B, 62C et le guide optique 64A, 64B, 64C d'une surface d'émission 54A, 54B, 54C. En particulier, le polariseur est solidaire d'un moyeu de l'hélice auquel les pales sont fixées.

La surface de détection 14A, 14B, 14C est adaptée pour détecter la différence d'intensité ou de couleur induite par le polariseur 67A, 67B, 67C, ce qui permet de distinguer la pale solidaire du polariseur des autres pales.

Par ailleurs, on peut, sans sortir du cadre du présent exposé, coupler le système de liaison à distance à un système de traitement du signal détecté sur ladite au moins une surface de détection du dispositif de détection. On peut pour ce faire utiliser un système de traitement analogue à celui mis en oeuvre classiquement pour la technique conventionnelle de « tip timing » (en français, « chronométrage de l'extrémité ») avec un capteur magnétique ou capacitif.

Les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

De plus, les différentes caractéristiques de ces modes ou exemples de réalisation peuvent être utilisées seules ou être combinées entre elles. Lorsqu'elles sont combinées, ces caractéristiques peuvent l'être comme décrit ci-dessus ou différemment, l'invention ne se limitant pas aux combinaisons spécifiques décrites dans le présent exposé. En particulier, sauf précision contraire, une caractéristique décrite en relation avec un mode ou exemple de réalisation peut être appliquée de manière analogue à un autre mode ou exemple de réalisation.

## Revendications

1. Ensemble apte à être incorporé à un aéronef (1A, 1B, 1C), comprenant un module fixe (10A, 10B, 10C) ; une hélice (50A, 50B, 50C) de moteur à plusieurs pales (52A, 52B, 52C) apte à tourner par rapport au module fixe (10A, 10B, 10C) autour d'un axe moteur (X) ; et un système de liaison à distance,
le système comprenant :
un dispositif optique d'émission configuré pour émettre un faisceau lumineux qui émerge à l'extérieur de l'hélice (50A, 50B, 50C), depuis au moins une surface d'émission (54A, 54B, 54C) de ladite hélice (50A, 50B, 50C) ; et
un dispositif optique de détection du faisceau lumineux, comprenant au moins une surface de détection (14A, 14B, 14C) qui est sensible au faisceau lumineux, et qui est incorporée au module fixe (10A, 10B, 10C) de telle sorte que ladite au moins une surface d'émission (54A, 54B, 54C) et ladite au moins une surface de détection (14A, 14B, 14C) viennent répétitivement en regard, à distance, l'une de l'autre, lorsque l'hélice (50A, 50B, 50C) tourne par rapport au module fixe (10A, 10B, 10C),
et **caractérisé en ce que** le dispositif optique d'émission comprend une source lumineuse (62A, 62B, 62C) disposée à distance de l'hélice (50A, 50B, 50C) ; et au moins un guide optique (64A, 64B, 64C) disposé à l'intérieur d'une pale (52A, 52B, 52C) de l'hélice (50A, 50B, 50C) de sorte à guider le faisceau lumineux depuis la source lumineuse (62A, 62B, 62C) jusqu'à ladite au moins une surface d'émission (54A, 54B, 54C).

2. Ensemble selon la revendication 1, dans lequel le système comprend une pluralité de surfaces de détection (14A, 14B, 14C) espacées les unes des autres.

3. Ensemble selon la revendication 1 ou 2, dans lequel, les pales (52A, 52B, 52C) de l'hélice (50A, 50B, 50C) présentant, chacune, un bord d'attaque (56A, 56B) et un bord de fuite (55A, 55B), ladite au moins une surface d'émission (54A, 54B, 54C) est incorporée à l'un quelconque des bords, parmi le bord d'attaque et le bord de fuite, de l'une desdites pales (52A, 52B, 52C) de l'hélice (50A, 50B, 50C).

4. Ensemble selon l'une quelconque des revendications 1 à 3, dans lequel, les pales (52B) de l'hélice présentant, chacune, une extrémité distale (59B) par rapport à l'axe moteur (X), ladite au moins une surface d'émission (54B) est incorporée à l'extrémité distale (59B) de l'une desdites pales (52B) de l'hélice (50B).

5. Ensemble selon l'une quelconque des revendications 1 à 4, dans lequel le dispositif optique d'émission comprend plusieurs surfaces d'émission (54A, 54B, 54C) respectivement incorporées à plusieurs pales (52A, 52B, 52C) de l'hélice (50A, 50B, 50C).

6. Ensemble selon la revendication 5, dans lequel le dispositif optique d'émission comprend plusieurs guides optiques (64A, 64B, 64C) respectivement disposés à l'intérieur des pales (52A, 52B, 52C) de l'hélice (50A, 50B, 50C) destinées à incorporer les surfaces d'émission (54A, 54B, 54C).

7. Ensemble selon la revendication 6, dans lequel le dispositif optique d'émission comprend un obturateur (66A, 66B, 66C) disposé entre la source lumineuse (62A, 62B, 62C) et les guides optiques (64A, 64B, 64C) de manière à n'éclairer que celui ou ceux parmi les guides optiques (64A, 64B, 64C) situé(s) à l'intérieur d'au moins une plage angulaire (WA, WA', WB, WC, WC', WC") prédéterminée.

8. Ensemble selon l'une quelconque des revendications 5 à 7, dans lequel le système comprend un dispositif d'identification des pales (52A, 52B, 52C) de l'hélice (50A, 50B, 50C).

9. Ensemble selon la revendication 8, dans lequel le dispositif d'identification comprend un système de polarisation configuré pour modifier la phase ou la couleur du faisceau lumineux pour au moins une des surfaces d'émission (54A, 54B, 54C).

10. Ensemble selon l'une quelconque des revendications 1 à 9, dans lequel, le module fixe (10A) incorporant un élément de structure d'une aile (2A) de l'aéronef (1A), ladite au moins une surface de détection (14A) est incorporée audit élément de structure.

11. Ensemble selon l'une quelconque des revendications 1 à 9, dans lequel, le module fixe (10B) incorporant un élément de fuselage (3B) de l'aéronef (1B), ladite au moins une surface de détection (14B) est incorporée audit élément de fuselage.

12. Ensemble selon l'une quelconque des revendications 1 à 9, dans lequel, le module fixe (10C) incorporant une nacelle (12C) pour l'hélice, ladite au moins une surface de détection est incorporée à ladite nacelle.

## Patentansprüche

1. Einheit, die geeignet ist, in ein Flugzeug (1 A, 1 B, 1 C) eingegliedert zu werden, umfassend ein festes Modul (10A, 10B, 10C), einen Motorpropeller (50A, 50B, 50C) mit mehreren Propellerblättern (52A, 52B, 52C), der geeignet ist, sich in Bezug zu dem festen Modul (10A, 10B, 10C) um eine Motorachse (X) zu drehen, und ein Fern-Verbindungssystem,
wobei das System umfasst:
eine optische Sendevorrichtung, die dazu vorgesehen ist, einen Lichtstrahl zu entsenden, der außerhalb des Propellers (50A, 50B, 50C) von mindestens einer Sendefläche (54A, 54B, 54C) des Propellers (50A, 50B, 50C) aufsteigt, und
eine optische Vorrichtung zur Erfassung des Lichtstrahls, umfassend mindestens eine Erfassungsfläche (14A, 14B, 14C), die für den Lichtstrahl empfindlich ist, und die in das feste Modul (10A 10B, 10C) eingegliedert ist, so dass die mindestens eine Sendefläche (54A, 54B, 54C) und die mindestens eine Erfassungsfläche (14A, 14B, 14C) einander wiederholt entfernt gegenüberliegend sind, wenn sich der Propeller (50A, 50B, 50C) in Bezug zu dem festen Modul (10A, 10B, 10C) dreht,
und **dadurch gekennzeichnet, dass** die optische Sendevorrichtung eine Lichtquelle (62A, 62B, 62C) umfasst, die in einer Entfernung zum Propeller (50A, 50B, 50C) angeordnet ist, und mindestens einen Lichtleiter (64A, 64B, 64C), der im Inneren eines Blattes (52A, 52B, 52C) des Propellers (50A, 50B, 50C) angeordnet ist, um den Lichtstrahl von der Lichtquelle (62A, 62B, 62C) zu der mindestens einen Sendefläche (54A, 54B, 54C) zu leiten.

2. Einheit gemäß Anspruch 1, bei der das System mehrere Erfassungsflächen (14A, 14B, 14C) umfasst, die zueinander beabstandet sind.

3. Einheit gemäß Anspruch 1 oder 2, bei der, wobei die Blätter (52A, 52B, 52C) des Propellers (50A, 50B, 50C) jeweils ein Vorderkante (56A, 56B) und eine Hinterkante (55A, 55B) aufweisen, die mindestens eine Sendefläche (54A, 54B, 54C) an einer der Kanten unter der Vorderkante und der Hinterkante eines der Blätter (52A, 52B, 52C) des Propellers (50A, 50B, 50C) eingegliedert ist.

4. Einheit gemäß einem der Ansprüche 1 bis 3, bei der, wobei die Blätter (52B) des Propellers jeweils ein distales Ende (59B) in Bezug zur Motorachse (X) aufweisen, die mindestens eine Sendefläche (54B) am distalen Ende (59B) eines der Blätter (52B) des Propellers (50B) eingegliedert ist.

5. Einheit gemäß einem der Ansprüche 1 bis 4, bei der die optische Sendevorrichtung mehrere Sendeflächen (54A, 54B, 54C) umfasst, die jeweils an mehreren Blättern (52A, 52B, 52C) des Propellers (50A, 50B, 50C) eingegliedert sind.

6. Einheit gemäß Anspruch 5, bei der die optische Sendevorrichtung mehrere Lichtleiter (64A, 64B, 64C) umfasst, die jeweils im Inneren der Blätter (52A, 52B, 52C) des Propellers (50A, 50B, 50C), die dazu bestimmt sind, die Sendeflächen (54A, 54B, 54C) aufzunehmen, angeordnet sind.

7. Einheit gemäß Anspruch 6, bei der die optische Sendevorrichtung ein Verschlusselement (66A, 66B, 66C) umfasst, das zwischen der Lichtquelle (62A, 62B, 62C) und den Lichtleitern (64A, 64B, 64C) angeordnet ist, um nur jenen oder jene unter den Lichtleitern (64A, 64B, 64C) zu beleuchten, der(die) sich innerhalb mindestens eines vorbestimmten Winkelbereichs (WA, WA', WB, WC, WC', WC") befindet(n).

8. Einheit gemäß einem der Ansprüche 5 bis 7, bei der das System eine Vorrichtung zur Identifizierung der Blätter (52A, 52B, 52C) des Propellers (50A, 50B, 50C) umfasst.

9. Einheit gemäß Anspruch 8, bei der die Identifizierungsvorrichtung ein Polarisationssystem umfasst, das dazu vorgesehen ist, die Phase oder die Farbe des Lichtstrahls für mindestens eine der Sendeflächen (54A, 54B, 54C) zu verändern.

10. Einheit gemäß einem der Ansprüche 1 bis 9, bei der, wobei das feste Modul (10A) ein Strukturelement eines Flügels (2A) des Flugzeugs (1 A) eingliedert, die mindestens eine Erfassungsfläche (14A) in das Strukturelement eingegliedert ist.

11. Einheit gemäß einem der Ansprüche 1 bis 9, bei der, wobei das feste Modul (10B) ein Rumpfelement (3B) des Flugzeugs (1 B) eingliedert, die mindestens eine Erfassungsfläche (14B) in das Rumpfelement eingegliedert ist.

12. Einheit gemäß einem der Ansprüche 1 bis 9, bei der, wobei das feste Modul (10C) eine Gondel (12C) für den Propeller eingeliefert, die mindestens eine Erfassungsfläche in die Gondel eingegliedert ist.

## Claims

1. A system suitable for being incorporated in an aircraft (1A, 1B, 1C), the system comprising: a stationary module (10A, 10B, 10C); an engine propeller (50A, 50B, 50C) having a plurality of blades (52A, 52B, 52C) suitable for rotating relative to the stationary module (10A, 10B, 10C) about an engine axis (X); and a remote connection system;
the remote connection system comprising:
· a light emitter device configured to emit a light beam that emerges to the outside of the propeller (50A, 50B, 50C) from at least one emission surface (54A, 54B, 54C) of said propeller (50A, 50B, 50C); and
· a light detector device for detecting the light beam, the optical device including at least one detection surface (14A, 14B, 14C) that is sensitive to the light beam, and that is incorporated in the stationary module (10A, 10B, 10C) so that said at least one emission surface (54A, 54B, 54C) and said at least one detection surface (14A, 14B, 14C) come repetitively to face each other remotely when the propeller (50A, 50B, 50C) is rotating relative to the stationary module (10A, 10B, 10C); and
· **characterized in that** the light emitter device comprises a light source (62A, 62B, 62C) arranged remotely from the propeller (50A, 50B, 50C); and at least one light guide (64A, 64B, 64C) arranged inside a blade (52A, 52B, 52C) of the propeller (50A, 50B, 50C) so as to guide the light beam from the light source (62A, 62B, 62C) to said at least one emission surface (54A, 54B, 54C).

2. A system according to claim 1, wherein the remote connection system comprises a plurality of detection surfaces (14A, 14B, 14C) that are spaced apart from one another.

3. A system according to claim 1 or 2, wherein each of the blades (52A, 52B, 52C) of the propeller (50A, 50B, 50C) presents a leading edge (56A, 56B) and a trailing edge (55A, 55B), and said at least one emission surface (54A, 54B, 54C) is incorporated in either one of the edges selected from the leading edge and the trailing edge of one of said blades (52A, 52B, 52C) of the propeller (50A, 50B, 50C).

4. A system according to any one of claims 1 to 3, wherein each of the blades (52B) of the propeller presents a distal end (59B) relative to the engine axis (X), and said at least one emission surface (54B) is incorporated in the distal end (59B) of one of said blades (52B) of the propeller (50B).

5. A system according to any one of claims 1 to 4, wherein the light emitter device comprises a plurality of emission surfaces (54A, 54B, 54C) incorporated in a respective plurality of blades (52A, 52B, 52C) of the propeller 50A, 50B, 50C).

6. A system according to claim 5, wherein the light emitter device comprises a plurality of light guides (64A, 64B, 64C) arranged inside respective blades (52A, 52B, 52C) of the propeller (50A, 50B, 50C) that are to incorporate the emission surfaces (54A, 54B, 54C).

7. A system according to claim 6, wherein the light emitter device includes a shutter (66A, 66B, 66C) arranged between the light source (62A, 62B, 62C) and the light guides (64A, 64B, 64C) in such a manner as to illuminate only the or each light guide (64A, 64B, 64C) that is situated within at least one predetermined angular range (WA, WA', WB, WC, WC', WC").

8. A system according to any one of claims 5 to 7, wherein the remote connection system includes an identification device for identifying the blades (52A, 52B, 52C) of the propeller (50A, 50B, 50C).

9. A system according to claim 8, wherein the identification device comprises a polarizing system configured to modify the phase or the color of the light beam for at least one of the emission surfaces (54A, 54B, 59C).

10. A system according to any one of claims 1 to 9, wherein the stationary module (10A) incorporates a structural element of a wing (2A) of the aircraft (1A), and said at least one detection surface (14A) is incorporated in said structural element.

11. A system according to any one of claims 1 to 9, wherein the stationary module (10B) incorporates a fuselage element (3B) of the aircraft (1B), and said at least one detection surface (14B) is incorporated in said fuselage element.

12. A system according to any one of claims 1 to 9, wherein the stationary module (10C) incorporates a nacelle (12C) for the propeller, and said at least one detection surface is incorporated in said nacelle.
